# EUROPEAN PATENT SPECIFICATION

(11) **EP 4 216 609 B1**
(45) Date of publication and mention of the grant of the patent: **15.04.2026**
(21) Application number: 22179072.8
(22) Date of filing: 14.06.2022
(51) Int. Cl.: H04W 48/10, H04W 84/12

(54) **METHOD AND APPARATUS FOR TRANSMITTING SYSTEM PARAMETERS IN A MULTI-LINK ACCESS DEVICE**
VERFAHREN UND VORRICHTUNG ZUR ÜBERTRAGUNG VON SYSTEMPARAMETERN IN EINER MEHRFACHVERBINDUNGS-ZUGANGSEINRICHTUNG
PROCÉDÉ ET DISPOSITIF DE TRANSMISSION DE PARAMÈTRES SYSTÈME DANS UN DISPOSITIF D'ACCÈS MULTI-LIAISONS

(30) Priority: 25.01.2022 CN 202210082895
(43) Date of publication of application: 26.07.2023
(73) Proprietor: Aegis 11 S.A., 2370 Howald (LU)
(72) Inventor: Wu, Hao, Chengdu, 610041 (CN); Yin, Lei, Chengdu, 610041 (CN)
(74) Representative: Metroconsult Srl

(56) References cited:
- US-A1- 2015 208 330
- US-A1- 2021 014 776
- "35. Extremely high throughput (EHT) MAC specification", vol. 802.11be drafts, no. D1.3, 17 November 2021 (2021-11-17), pages 1 - 104, XP068186660, Retrieved from the Internet <URL:https://grouper.ieee.org/groups/802/11/private/Draft_Standards/11be/Draft%20P802.11be_D1.3%20-%20Word.zip TGbe_Cl_35.doc> [retrieved on 20211117]
- 802 11 WORKING GROUP OF THE LAN/MAN STANDARDS COMMITTEE OF THE IEEE COMPUTER SOCIETY: "Draft Standard for Information technology- Tele- communications and information exchange between systems Local and metropolitan area networks- Specific requirements ? ? Part 11: Wireless LAN Medium Access Control ? (MAC) and Physical Layer (PHY) Specifications ? ? Amendment 8: Enhancements for extre", vol. 802.11be drafts, no. D0.4, 19 March 2021 (2021-03-19), pages 1 - 511, XP068183459, Retrieved from the Internet <URL:http://grouper.ieee.org/groups/802/11/private/Draft_Standards/11be/Draft%20P802.11be_D0.4.pdf> [retrieved on 20210319]
- ABHISHEK PATIL (QUALCOMM): "MLO: Signaling of critical updates", vol. 802.11 EHT; 802.11be, no. 7, 24 August 2020 (2020-08-24), pages 1 - 19, XP068172219, Retrieved from the Internet <URL:https://mentor.ieee.org/802.11/dcn/20/11-20-0586-07-00be-mlo-signaling-of-critical-updates.pptx> [retrieved on 20200824]

## Description

### Technical Field

The disclosure relates to the field of communication, and in particular to a method and apparatus for transmitting system parameters of a soft access device, a device and a medium.

### Background

802.11be system, also referred to as an extremely high throughput (EHT) system, is enhanced in functions by means of a series of system characteristics and multiple mechanisms to achieve extremely high throughput. As the use of wireless local area networks (WLANs) keeps growing, it is increasingly important to provide wireless data services in numerous environments (for example, homes, companies and hotspots). In particular, video traffic will still be the dominant traffic type in a large number of WLAN deployments. Due to the emergence of 4k and 8k videos (at an uncompressed rate of 20 Gbps), the throughput requirements of these applications are also evolving. Thus, novel high-throughput and low-latency applications such as virtual reality or augmented reality, gaming, remote office, and cloud computing will proliferate (for example, latency below 5 milliseconds for live gaming).

In view of high throughput and stringent real-time latency requirements of these applications, users expect higher throughput, higher reliability, less latency and jitter, and higher power efficiency when supporting the applications by means of WLANs. Users expect to improve integration with time-sensitive networks (TSNs) to support applications on heterogeneous Ethernet and wireless local area networks (LANs). 802.11be networks aim to ensure the competitiveness of the WLANs by further improving overall throughput and reducing latency, and further ensure backward compatibility and coexistence with legacy technology standards. 802.11 operating in 2.4 GHz, 5 GHz, and 6 GHz bands are compatible with devices.

The document ("35. Extremely high throughput (EHT) MAC specification", IEEE DRAFT; TGBE_CL_35, IEEE-SA, PISCATAWAY, NJ USA, vol. 802.11 be drafts, no. D1.3 17 November 2021 (2021-11-17), pages 1-104, XP068186660,) discloses aspects of multi-link operation according to IEEE 802.11be, but does not solve the problem of efficiently updating system parameters of logical access points on non-primary links when only the primary link can broadcast.

### Summary

In a multi-link scene, a terminal device, serving as a temporary access device, which is also referred to as a soft access device or a mobile access device, is allowed to establish access points on a plurality of links to provide connection services for other terminal devices. Although the terminal device, serving as the access device, may establish the plurality of access points, only the access point established on one link may send a broadcast message, the link is referred to as a primary link, the access points established on other links may not send the broadcast message, and the links are referred to as non-primary links. In an existing multi-link system, if the access points update key system parameters, for example, access parameters, channel configuration, etc., new system parameters need to be released by means of the broadcast message, and due to the limitation above, the access points temporarily established by the terminal device may not release updated parameters in a traditional broadcast mode after the system parameters are changed on the non-primary links. In view of this, embodiments of the disclosure provide a method and apparatus for transmitting system parameters of a soft access device, a device and a medium.

The invention relates to methods and an apparatus for transmitting system parameters in a multi-link device comprising a primary link and one or more non-primary links. Only the access point on the primary link can broadcast messages. To ensure efficient updating of system parameters of non-primary links, the broadcast message includes a reduced neighbor report information element comprising a parameter indicating the duration of subsequent broadcast messages containing the updated system parameters. The invention is defined by the appended claims.

The embodiments of the disclosure enables the terminal device connected to the soft access device to acquire the updated system parameters in time by monitoring system parameter changes on the non-primary link of the soft access device and acquiring the changed system parameters, thereby avoiding access failure of the terminal device on the non-primary link, and guaranteeing communication between the terminal device and the soft access device.

### Brief Description of the Drawings

Fig. 1 is an architectural schematic diagram of a communication system provided in an embodiment of the disclosure;
Fig. 2 is a schematic diagram of a method for transmitting system parameters of a soft access device provided in an embodiment of the disclosure; and
Fig. 3 is a structural schematic diagram of an electronic device provided in an embodiment of the disclosure.

### Detailed Description of the Embodiments

In order to make those skilled in the art better understand the technical solutions in the disclosure, the technical solutions in embodiments of the disclosure will be clearly and completely described below. Apparently, the embodiments described are merely some of, rather than all of, the embodiments of the disclosure. It should be understood that the particular embodiments described herein are merely illustrative of the disclosure and are not intended to limit the disclosure. Although the contents disclosed in the disclosure are introduced according to one or several exemplary examples, it should be understood that all aspects of these contents disclosed may also constitute a complete technical solution separately. The following embodiments and the features in the embodiments may be combined with each other without conflict.

In the embodiments of the disclosure, "at least one" refers to one or more, and "plurality" refers to two or more. In order to conveniently and clearly describe the technical solutions of the embodiments of the disclosure, in the embodiments of the disclosure, the words "first", "second", etc. are used to distinguish the same or similar items having substantially the same function and effect, and those skilled in the art will understand that the words "first", "second", etc. do not limit the number and order of execution, are only used to illustrate and distinguish description objects, has no difference in order, also do not represent a special limit on the number of devices in the embodiments of the disclosure, and may not constitute any limit on the embodiments of the disclosure.

It should be noted that a multi-link device includes a plurality of logical entities, where each of the logical entities transmits data by means of a link, and includes an independent data receiving and transmitting component. A single-link device has only one logical entity and only one media access control (MAC) address, and the multi-link device has one MAC address, and each of the logical entities belonging to the multi-link device has one MAC address. For example, one multi-link device runs with the three logical entities, such that there are four MAC addresses on the physical device, one address is an address of the multi-link device, and each of the three logical entities has one MAC address. In the embodiments of the disclosure, logical entities in a terminal device are referred to as logical terminals, and logical entities in an access device are referred to as logical access points.

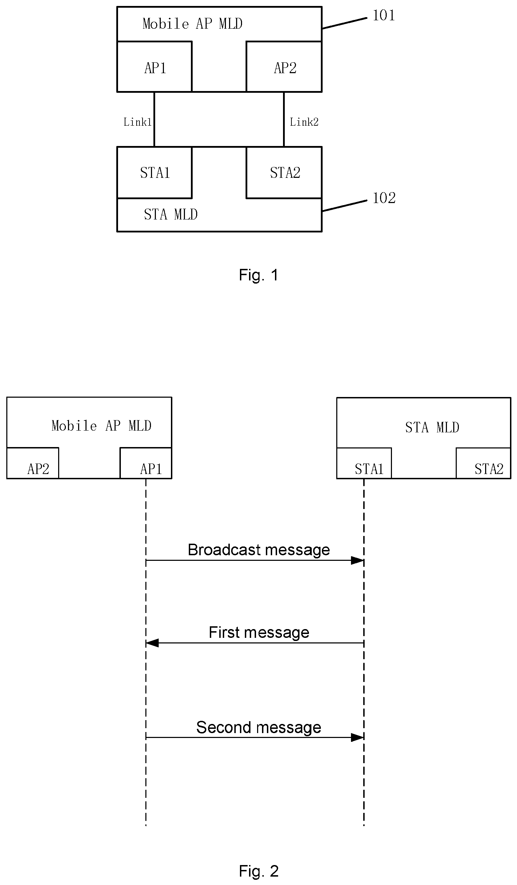

Fig. 1 is an architectural schematic diagram of a communication system provided in an embodiment of the disclosure. As shown in Fig. 1, the communication system includes a terminal device Mobile access point (AP) multi-link device (MLD)101 and a terminal device station (STA) MLD102, where the terminal device Mobile AP MLD 101 is a soft access device, and establishes two logical access points AP1 and AP2, where the AP1 operates on a primary link 1, the AP1 sends a broadcast message, for example, a Beacon message and a probe response message, and the AP2 operates on a non-primary link 2, the AP2 does not send the broadcast message, and both the AP1 and the AP2 may perform data transmission with a connected terminal; and the terminal device STA MLD102 includes two logical terminals STA1 and STA2, and a STA MLD is connected to a Mobile AP MLD, where the STA1 is connected to the AP1 on the primary link 1, and the STA2 is connected to the AP2 on the non-primary link 2.It should be understood that Fig. 1 is only the architectural schematic diagram of the communication system, and that the number of access devices and the number of terminal devices in the communication system are not limited in the embodiment of the disclosure, and the number of logical entities in a multi-link device is not limited. Those skilled in the art will understand that in accordance with the principles and functions described herein, the term "access point (AP)" according to the disclosure may further be used to describe an access port or any other device capable of receiving and transmitting wireless signals within a network architecture, and therefore, the use of the access points is merely exemplary.

Fig. 2 is a schematic diagram of a method for transmitting system parameters of a soft access device provided in an embodiment of the disclosure, where the transmitting herein includes sending and acquiring. As shown in Fig. 2, the method for sending and acquiring system parameters of a soft access device includes:
201, after system parameters of an AP2 are updated, send, by an AP1, a broadcast message, for example, a Bea con message or a Probe response message, which includes a reduced neighbor report information element which is used for indicating information of a neighboring logical access point, and includes the following parameters:
an MLD identifier (ID), which is used for identifying a device to which the neighboring logical access point is affiliated with, where if a value of the MLD ID is set as 0, it is indicated that the neighboring logical access point is affiliated with the same device as the AP1 sending the broadcast message, i.e., the same Mobile AP MLD; if the value of the MLD ID is set as 1, it is indicated that the neighboring logical access point does not belong to the same device as the AP1 sending the broadcast message; and optionally, the value of the MLD ID may further be set as X (a predefined value), it is indicated that the neighboring logical access point is affiliated with the same soft access device as the AP1 sending the broadcast message and is a logical access point operating on a non-primary link in the soft access device;
a link ID, which is used for identifying a link corresponding to the neighboring logical access point, is configured as an identifier of the non-primary link in an embodiment of the disclosure, and may correspond to a logical access point AP2 operating on the non-primary link on the Mobile AP MLD; and
a base station subsystem (BSS) parameters change count, which is a system parameter change count, and is used for identifying a state of update of system parameters, where when a value of a parameter previously received by a terminal is the same as that of a parameter currently sent, it is indicated that the access point does not update the system parameters; and when the value of the parameter previously received by the terminal is different from that of the parameter currently sent, the access point updated the system parameter.
202, after a STA1 receives the broadcast message sent by the AP1, if the received reduced neighbor report information element indicates that a value of a BSS parameters change count corresponding to the non-primary link is different from that of a BSS parameters change count received previously, send, by the STA1, a first message to the AP1, the first message is used for requesting system parameters of a logical access point, and including the following parameters: a receiver address, which is set as an address of the AP1;
a link ID, which is used for identifying a link corresponding to the requested logical access point, is set as the identifier of the non-primary link in the embodiment of the disclosure, and may correspond to the logical access point AP2 operating on the non-primary link on the Mobile AP MLD; and
an MLD ID, which is used for identifying a device to which the requested logical access point is affiliated with, where if a value of the MLD ID is set as 0, it is indicated that the device to which the requested logical access point is affiliated with is a device to which the AP1 receiving the message is affiliated with, i.e., the same Mobile AP MLD; and if the value of the MLD ID is set as 1, it is indicated that the device to which the requested logical access point is affiliated with is not the device to which the AP1 receiving the message is affiliated with.

Optionally, the STA1 further determines whether the link indicated by the link ID in the received reduced neighbor report information element is a non-primary link. Exemplarily, a method for determining a non-primary link by the STA1 is as follows: if a value of the MLD ID is 0, whether the link is a non-primary link is determined according to locally stored information and a value of the link ID, or if the value of the MLD ID is X, the link is determined as the non-primary link.

203, determine a target device (the device to which the requested logical access point is affiliated with) as a device to which the AP1 is affiliated with, i.e., the Mobile AP MLD, according to the value of the MLD ID in the first message after the AP1 receives the first message, where specifically, when the MLD ID=0, the target device is determined as the device to which the target device is affiliated with, and otherwise, the target device is determined as a device to which the AP1 does not belong, and the following operations are not executed:
1) construct a second message in response to the first message, the second message including system parameters of a logical access point corresponding to the parameter link ID in a mobile AP MLD, and send the second message;
   alternatively,
2) construct the second message in response to the first message, the second message including the system parameters of the logical access point corresponding to the parameter link ID in the mobile AP MLD, start a delay timer T1, and send the second message when time of the T1 is up.

The first message sent by the terminal may be prevented from being frequently responded by using the delay timer T1, and the second message may be uniformly sent as a response to the request of the terminal after a period of time is accumulated, thereby reducing signaling overhead, and saving power consumption of the mobile AP MLD. Exemplarily, the second message includes the following parameters:
a receiver address, which is set as an address of the STA1;
a link ID, which is used for identifying a link corresponding to a logical access point corresponding to the sent system parameters, is set as the identifier of the non-primary link in the embodiment of the disclosure, and may correspond to the logical access point AP2 operating on the non-primary link on the Mobile AP MLD;
an AP profile, which is system parameters of an access point operating on a link corresponding to the link ID; and
a BSS parameters change count, which is a system parameter change count, and corresponds to a state of the system parameters of the access point operating on the link corresponding to the link ID when the second message is sent.

204, receive, by the logical terminal STA1 of the STA MLD, the second message, and update, by the logical terminal STA2 of the STA MLD, the locally saved system parameters of the AP2 to the system parameters in the AP profile received by the STA1, and a locally saved value of a previous system parameter change count corresponding to the AP2 to a value of the parameter BSS parameters change count received by the STA1.

205, use, by the logical terminal STA2 of the STA MLD, the updated system parameters to perform data communication with the AP2.

In some embodiments, a first message may further include an instruction whether to request only the updated system parameters and a system parameter change count corresponding to a state of local system parameters. Exemplarily, the first message includes the following parameters:
a receiver address, which is set as an address of an AP1;
a link ID, which is used for identifying a link corresponding to a requested logical access point, is configured as an identifier of a non-primary link in the embodiments of the disclosure, and may correspond to a logical access point AP2 operating on the non-primary link on a Mobile AP MLD;
an MLD ID, which is used for identifying a device to which the requested logical access point is affiliated with, where if the value of the MLD ID is set as 0, it is indicated that the device to which the requested logical access point is affiliated with is a device to which an AP1 receiving the message is affiliated with; and if the value of the MLD ID is set as 1, it is indicated that the device to which the requested logical access point is affiliated with is not the device to which the AP1 receiving the message is affiliated with;
updated BSS parameters, which are system parameters whether to only request updated system parameters, where a value of the updated BSS parameters is set as 1, it is indicated that the updated system parameters are only requested; and otherwise, the value of the updated BSS parameters is set to be 0;
a current change count, which is set as a system parameter change count corresponding to a state of local system parameters; and
complete parameters, which indicate whether all or part of the system parameters are requested, where for example, when a value of the parameter, updated BSS parameters, is 1, a value of the parameter, complete parameters, is set as 0, which indicates that part of the system parameters are requested; and when the value of the parameter updated BSS parameters is 0, the value of the parameter, complete parameters, may be set as 1 or 0, which may indicate that all the system parameters are requested, or may indicate that part of the system parameters are requested

Correspondingly, in step 203, the target device is determined as the device to which the target device is affiliated with, i.e., the Mobile AP MLD, according to the value of the MLD ID in the first message after the AP1 receives the first message, where specifically, when the MLD ID=0, the target device is determined as the device to which the target device is affiliated with, and otherwise, the target device is not determined as the device to which the target device is affiliated with, and the following operations are not executed:
1) construct a second message in response to the first message, where if a value of the received parameter updated BSS parameters is 1, the second message includes system parameters, changed between a current system parameter change count and a system parameter change count indicated by the current change count, of the logical access point corresponding to the parameter link ID in the Mobile AP MLD, and
   if the value of the received parameter updated BSS parameters is 0, the second message includes all system parameters of the logical access point corresponding to the parameter link ID in the mobile AP MLD or part of requested system parameters; and
   send the second message;
   alternatively,
2) construct a second message in response to the first message, where if the value of the received parameter updated BSS parameters is 1, the second message includes system parameters, changed between the current system parameter change count and the system parameter change count indicated by the current change count, of the logical access point corresponding to the parameter link ID in the Mobile AP MLD, and
   if the value of the received parameter updated BSS parameters is 0, the second message includes all system parameters of the logical access point corresponding to the parameter link ID in the mobile AP MLD or part of requested system parameters; and
   start a delay timer T1, and send the second message when time of the T1 is up.

Optionally, the first message may be a probe request message (e.g., a ML probe request message), and correspondingly, the second message may be a probe response message (e.g., an ML probe response message). In this embodiment, the parameter receiver address in the probe response message may be set to a broadcast address.

A reduced neighbor report information element in a broadcast message sent by an AP1 includes a first parameter, where the first parameter is used for indicating duration of sending updated system parameters of an AP2 in the broadcast message of the AP1; and then the broadcast message sent by the AP1 within the duration indicated by a value of the first parameter includes the updated system parameters of the AP2. Exemplarily, the reduced neighbor report information element includes the following parameters:
an MLD ID, which is used for identifying a device to which the neighboring logical access point is affiliated with, where if a value of the MLD ID is set as 0, it is indicated that the neighboring logical access point is affiliated with the same device as the AP1 sending the broadcast message, i.e., the same Mobile AP MLD; if the value of the MLD ID is set as 1, it is indicated that the neighboring logical access point does not belong to the same device as the AP1 sending the broadcast message; and optionally, the value of the MLD ID may further be set as X (a predefined value), it is indicated that the neighboring logical access point is affiliated with the same soft access device as the AP1 sending the broadcast message and is a logical access point of the soft access device operating on a non-primary link;
a link ID, which is used for identifying a link corresponding to the neighboring logical access point, is configured as an identifier of the non-primary link in an embodiment of the disclosure, and may correspond to a logical access point AP2 operating on the non-primary link on the Mobile AP MLD;
a BSS parameters change count, which is a system parameter change count, and is used for identifying a state of update of system parameters, where when a value of a parameter previously received by a terminal is the same as that of a parameter currently sent, it is indicated that the access point does not update the system parameters; and when the value of the parameter previously received by the terminal is different from that of the parameter currently sent, the access point updated the system parameter;
a duration count, which is duration of sending updated system parameters of the AP2 in the broadcast message of the AP1, where for example, if a value of the duration count is 7, periodic sending in next 7 broadcast messages is indicated, and when the value of the duration count is 0, it is indicated that sending in the broadcast message is stopped; and of course, there are other count modes having the same effect, and the same effect is achieved as long as duration to broadcast and update the system parameters may be indicated.

In this embodiment, after receiving the broadcast message sent by the AP1, the STA1 does not need to send the first message for requesting the system parameters on the non-primary link to the AP1, if the received reduced neighbor report information element indicates that a value of a BSS parameters change count corresponding to the non-primary link is different from that of a BSS parameters change count received previously, and a value of the parameter duration count indicates that a subsequent broadcast message includes updated system parameter of a second logical access point, the updated system parameters of the second logical access point are read within the duration indicated by the value of the parameter duration count; the logical terminal STA2 of the STA MLD updates locally stored system parameters of the AP2 to updated system parameters received by the STA1, and updates a locally stored value of a previous system parameter change count corresponding to the AP2 to a value of the parameter BSS parameters change count received by the STA1; and the logical terminal STA2 of the STA MLD uses the updated system parameters to perform data communication with the AP2.

An embodiment of the disclosure further provides an apparatus for acquiring system parameters of a soft access device, the soft access device including a first logical access point operating on a primary link and a second logical access point operating on a non-primary link, where the apparatus includes a parameter acquisition component, the parameter acquisition component is used for executing:
receive a broadcast message sent by the soft access device on the primary link, the broadcast message including a reduced neighbor report information element, the reduced neighbor report information element is used for indicating information of a neighboring logical access point and including a multi-link device identifier, a first link identifier and a system parameter change count, the multi-link device identifier is used for identifying a device to which the neighboring logical access point is affiliated with, the first link identifier is used for identifying a link corresponding to the neighboring logical access point and being configured as an identifier of the non-primary link, and the system parameter change count is used for identifying a state of update of system parameters;
send a first message to the soft access device on the primary link in a case that the received reduced neighbor report information element indicates that a value of a system parameter change count corresponding to the non-primary link is different from that of a system parameter change count received previously, the first message is used for requesting system parameters of a logical access point and including a second link identifier and an identifier of a target multi-link device, the second link identifier is used for identifying a link corresponding to a requested logical access point and being configured as an identifier of the non-primary link, and the identifier of the target multi-link device is used for identifying a device to which the requested logical access point is affiliated with and being configured to indicate a device to which the first logical access point receiving the first message is affiliated with; and
receive a second message in response to the first message and sent by the soft access device on the primary link, the second message including an identifier of the non-primary link, system parameters of the second logical access point operating on the non-primary link and a system parameter change count.

In an optional example, those skilled in the art may understand that the above apparatus may specifically be the STA MLD in the above embodiment, and that the apparatus may be used for executing various flows and/or steps corresponding to the STA MLD in the above method, which is not described herein in order to avoid repetition.

An embodiment of the disclosure provides an apparatus for acquiring system parameters of a soft access device, the soft access device including a first logical access point operating on a primary link and a second logical access point operating on a non-primary link, where the apparatus includes a parameter acquisition component, the parameter acquisition component is used for executing:
receive a broadcast message sent by the soft access device on the primary link, the broadcast message including a reduced neighbor report information element, the reduced neighbor report information element is used for indicating information of a neighboring logical access point and including a multi-link device identifier, a first link identifier, a system parameter change count and a first parameter, the multi-link device identifier is used for identifying a device to which the neighboring logical access point is affiliated with, the first link identifier is used for identifying a link corresponding to the neighboring logical access point and being configured as an identifier of the non-primary link, the system parameter change count is used for identifying a state of update of system parameters, and the first parameter is used for indicating duration of sending updated system parameters of the second logical access point in the broadcast message of the first logical access point; and
read the updated system parameters of the second logical access point within the duration indicated by a value of the first parameter in a case that the received reduced neighbor report information element indicates that a value of a system parameter change count corresponding to the non-primary link is different from that of a system parameter change count received previously and a value of the first parameter indicates that a subsequent broadcast message includes the updated system parameters of the second logical access point.

In an optional example, those skilled in the art may understand that the above apparatus may specifically be the STA MLD in the above embodiment, and that the apparatus may be used for executing various flows and/or steps corresponding to the STA MLD in the above method, which is not described herein in order to avoid repetition.

An embodiment of the disclosure provides an apparatus for sending system parameters of a soft access device, the soft access device including a first logical access point operating on a primary link and a second logical access point operating on a non-primary link, where the apparatus includes a parameter sending component, the parameter sending component is used for executing:
send a broadcast message sent by the soft access device on the primary link, the broadcast message including a reduced neighbor report information element, the reduced neighbor report information element is used for indicating information of a neighboring logical access point and including a multi-link device identifier, a first link identifier and a system parameter change count, the multi-link device identifier is used for identifying a device to which the neighboring logical access point is affiliated with, the first link identifier is used for identifying a link corresponding to the neighboring logical access point and being configured as an identifier of the non-primary link, and the system parameter change count is used for identifying a state of update of system parameters;
receive a first message sent by a terminal device on the primary link, the first message is used for requesting system parameters of a logical access point and including a second link identifier and an identifier of a target multi-link device, the second link identifier is used for identifying a link corresponding to a requested logical access point and being configured as an identifier of the non-primary link, and the identifier of the target multi-link device is used for identifying a device to which the requested logical access point is affiliated with and being configured to indicate a device to which the first logical access point receiving the first message is affiliated with; and
send a second message in response to the first message to the terminal device on the primary link in a case that the identifier of the target multi-link device in the received first message indicates the device to which the first logical access point receiving the first message is affiliated with, the second message including an identifier of the non-primary link, system parameters of the second logical access point operating on the non-primary link and a system parameter change count.

In an optional example, those skilled in the art may understand that the above apparatus may specifically be the Mobile AP MLD in the above embodiment, and that the apparatus may be used for executing various flows and/or steps corresponding to the Mobile AP MLD in the above method, which is not described herein in order to avoid repetition.

An embodiment of the disclosure provides an apparatus for sending system parameters of a soft access device, the soft access device including a first logical access point operating on a primary link and a second logical access point operating on a non-primary link, where the apparatus includes a parameter sending component, the parameter sending component is used for executing:
send a broadcast message on the primary link, the broadcast message including a reduced neighbor report information element, the reduced neighbor report information element is used for indicating information of a neighboring logical access point and including a multi-link device identifier, a first link identifier, a system parameter change count and a first parameter, the multi-link device identifier is used for identifying a device to which the neighboring logical access point is affiliated with, the first link identifier is used for identifying a link corresponding to the neighboring logical access point and being configured as an identifier of the non-primary link, the system parameter change count is used for identifying a state of update of system parameters, the first parameter is used for indicating duration of sending updated system parameters of the second logical access point in the broadcast message of the first logical access point, and
the broadcast message sent within the duration indicated by a value of the first parameter including the updated system parameters of the second logical access point.

In an optional example, those skilled in the art may understand that the above apparatus may specifically be the Mobile AP MLD in the above embodiment, and that the apparatus may be used for executing various flows and/or steps corresponding to the Mobile AP MLD in the above method, which is not described herein in order to avoid repetition.

It should be understood that the apparatuses herein are represented in the form of functional components. The term "component" herein may refer to an application specific integrated circuit (ASIC), an electronic circuit, a processor (e.g., a shared processor, a proprietary processor, or a group processor, etc.) for executing one or more software or firmware programs, a memory , a merged logical circuit, and/or other appropriate components to support described functions. The above apparatus has the function of implementing the corresponding steps in the above method. The above functions may be implemented by hardware or by executing corresponding software by the hardware. The hardware or software includes one or more components corresponding to the functions above. In the embodiment of the disclosure, the apparatus may be a chip or a system on a chip, for example, a system on chip (SoC), which is not limited herein by the disclosure.

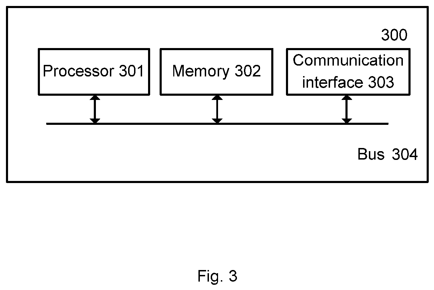

An embodiment of the disclosure further provides an electronic device. Fig. 3 is a structural schematic diagram of the electronic device provided in the embodiment of the disclosure. As shown in Fig. 3, the device 300 includes a processor 301, a memory 302, and a communication interface 303, where the processor 301, the memory 302 and the communication interface 303 communicate with one another by means of a bus 304, and the memory 302 stores a command executable by the processor
301, and the command is loaded and executed by the processor 301 to control the communication interface 303 to send and/or receive a signal.

It should be understood that the device 300 may specifically be the STA MLD or the Mobile AP MLD in the above embodiment, or that the functions of the STA MLD or the Mobile AP MLD in the above embodiment may be integrated in the device 300, and the device 300 may be used for executing various steps and/or flows corresponding to the STA MLD or the Mobile AP MLD in the above embodiment. Optionally, the memory 302 may include a read-only memory and a random access memory and provide commands and data for the processor 301. The memory 302 may further include, in part, a non-volatile random access memory. For example, the memory 302 may further store device type information. The processor 301 may be used for executing the command stored in the memory 301, and when the processor 301 executes the command, the processor 301 may execute corresponding various steps and/or flows in the above method embodiments.

It should be understood that the processor may be a central processing unit (CPU) or other general-purpose processors, a digital signal processor (DSP), an application specific integrated circuit (ASIC), a field-programmable gate array (FPGA), or other programmable logic devices, a discrete gate or transistor logic device, a discrete hardware component, etc. in the embodiment of the disclosure. The general-purpose processor may be a microprocessor, or the processor may be any conventional processor, etc.

In an implementation process, each step of the above method may be completed by means of an integrated logical circuit of hardware in the processor or the command in the form of software. Steps of the method disclosed in the embodiments of the disclosure may be directly embodied as being completed by execution by the hardware processor, or by execution of combination of hardware and software components in the processor. A software component may be located in storage media, such as the random access memory, a flash memory, the read-only memory, a programmable read-only memory, or an electrically erasable programmable memory, a register, etc., which are mature in the field. The storage media are located in the memory, and the processor executes the command in the memory and completes the steps of the above method in combination with hardware of the processor, which is not described in detail herein in order to avoid repetition.

The above embodiments may be implemented in whole or in part by software, hardware, firmware, or any other combination. When implemented in software, the above embodiments may be implemented in whole or in part in the form of a computer program product. The computer program product includes one or more computer commands or a computer program. The flows or functions according to the embodiments of the disclosure are generated in whole or in part when the computer commands or the computer program are loaded or executed on a computer. The computer may be a general-purpose computer, a special-purpose computer, a computer network, or other programmable apparatuses. The computer commands may be stored in computer-readable storage media or transmitted from one computer-readable storage medium to another computer-readable storage medium, for example, the computer commands may be transmitted from one website, computer, server, or data center by wired (e.g., infrared, wireless, microwave, etc.) means to another website, computer, server, or data center. The computer-readable storage medium may be any available media that may be accessed by a computer or data storage devices of servers, data centers, etc. that include one or more sets of available media. The available media may be magnetic media (e.g., floppy disks, hard disks and magnetic tapes), optical media (e.g., digital video disks (DVDs)), or semiconductor media. The semiconductor media may be solid state disks.

It should be understood that in various embodiments of the disclosure, the size of the sequence numbers of the processes above does not imply the order of execution, and the order of execution of the processes should be determined by their function and inherent logic, and should not be construed as limiting the implementation of the embodiments of the disclosure. The component described as a separable component may be physically separated or not, and a component shown as a component may be a physical component or not, that is, may be located at one place or may also be distributed on a plurality of network components, and part or all of components are selected to achieve the objective of the solutions of the embodiments of the disclosure according to actual requirements.

In the several embodiments provided in the disclosure, it should be understood that the devices, apparatuses and methods disclosed may be
implemented in other ways. For example, the apparatus embodiments described above are merely schematic, for example, division of the components is merely a kind of division of logical functions, there may be other division modes in actual implementation, and for example, one component may be divided into a plurality of components or assemblies, or the plurality of components or assemblies may be combined or integrated into another system, or some features may be omitted or not conducted. In another aspect, the coupling or direct coupling or communicative connection to one another shown or discussed may be achieved by means of some interfaces, and the indirect coupling or communicative connection of apparatuses or components may be in an electrical form, a mechanical form, or other forms.

Those of ordinary skill in the art will appreciate that the components and algorithm steps of the examples described in connection with the embodiments disclosed herein may be implemented in electronic hardware, or a combination of computer software and electronic hardware. Whether these functions are executed in hardware or software depends on the specific application and design constraints of the technical solutions. Those skilled in the art may use different methods to implement functions described for each particular application, but such implementation should not be considered to go beyond the scope of the disclosure.

The embodiments described above are provided to illustrate the principles of the invention. The scope of protection is defined solely by the appended claims.

## Claims

1. A method performed by a terminal device station, STA, MLD for acquiring system parameters of a soft access device, the soft access device is a Mobile access point, AP, multi-link device, MLD, the soft access device comprising a first logical access point (AP1) operating on a primary link and a second logical access point (AP2) operating on a non-primary link, a link on which a access point is established is the primary link ,wherein the access point on the link can send a broadcast message; the other links on which the access points are established are the non-primary links, wherein the access points on the other links cannot send the broadcast message, wherein the method comprises:
receiving, by the terminal device station, STA, MLD, a broadcast message sent by the soft access device on the primary link, the broadcast message comprising a reduced neighbor report element, the reduced neighbor report element is used for indicating information of a neighboring logical access point and comprising a multi-link device identifier, a first link identifier and a system parameter change count, the multi-link device identifier is used for identifying a device to which the neighboring logical access point is affiliated with, the first link identifier is used for identifying a link corresponding to the neighboring logical access point and being configured as an identifier of the non-primary link, and the system parameter change count is used for identifying a state of update of system parameters;
sending, by the terminal device STA MLD, a first message to the soft access device on the primary link in a case that a received reduced neighbor report element indicates that a value of a system parameter change count corresponding to the non-primary link is different from a value of a system parameter change count received previously, the first message is used for requesting system parameters of a logical access point and comprising a second link identifier and an identifier of a target multi-link device, the second link identifier is used for identifying a link corresponding to a requested logical access point and being configured as an identifier of the non-primary link, and the identifier of the target multi-link device is used for identifying a device to which the requested logical access point is affiliated with and being configured to indicate a device to which the first logical access point receiving the first message is affiliated with; and
receiving, by the terminal device STA MLD, a second message in response to the first message and sent by the soft access device on the primary link, the second message comprising an identifier of the non-primary link, system parameters of the second logical access point operating on the non-primary link and a system parameter change count;
wherein the reduced neighbor report information element comprises a first parameter, the first parameter is used for indicating duration of sending updated system parameters of the second logical access point (AP2) in the broadcast message of the first logical access point (AP1); and the method further comprises:
reading the updated system parameters of the second logical access point (AP2) within the duration indicated by a value of the first parameter in a case that the received reduced neighbor report information element indicates that the value of a system parameter change count corresponding to the non-primary link is different from the value of the system parameter change count received previously and the value of the first parameter indicates that a subsequent broadcast message comprises the updated system parameters of the second logical access point (AP2), the duration indicates the number of subsequent broadcast messages which comprise the updated system parameter of the second logical access point (AP2).

2. The method for acquiring system parameters of the soft access device as claimed in claim 1, wherein the first message further comprises a system parameter change count corresponding to a state of local system parameters and an instruction whether to request only updated system parameters; and
in a case that the instruction in the first message requests only the updated system parameters, system parameters of the second logical access point (AP2) operating on the non-primary link comprised in the second message are changed system parameters of the second logical access point (AP2) between the system parameter change count in the second message and the system parameter change count corresponding to the state of the local system parameters in the first message.

3. The method for acquiring system parameters of the soft access device as claimed in claim 1 or 2, wherein after the receiving the broadcast message sent by the soft access device on the primary link and before sending the first message, the method further comprises:
determining whether a link indicated by the first link identifier is the non-primary link according to locally stored information and a value of a link identifier in the reduced neighbor report information element in a case that the multi-link device identifier in the received reduced neighbor report information element indicates that the neighboring logical access point is affiliated with the same device as the first logical access point (AP1) sending the broadcast message; alternatively,
determining the link indicated by the first link identifier as the non-primary link in a case that the multi-link device identifier in the received reduced neighbor report information element indicates that the neighboring logical access point is affiliated with the same soft access device as the first logical access point (AP1) sending the broadcast message, and the neighboring logical access point is a logical access point operating on the non-primary link in the soft access device.

4. The method for acquiring system parameters of the soft access device as claimed in claim 1 or 2, wherein the first message is a multi-link probe request message, and the second message is a multi-link probe response message.

5. The method for acquiring system parameters of the soft access device as claimed in claim 1, wherein after the receiving the broadcast message sent by the soft access device on the primary link and before the reading the updated system parameters of the second logical access point (AP2), the method further comprises:
determining whether the link indicated by the first link identifier is the non-primary link according to locally stored information and the value of a link identifier in the reduced neighbor report information element in a case that the multi-link device identifier in the received reduced neighbor report information element indicates that the neighboring logical access point is affiliated with the same device as the first logical access point (AP1) sending the broadcast message; alternatively,
determining the link indicated by the first link identifier as the non-primary link in a case that the multi-link device identifier in the received reduced neighbor report information element indicates that the neighboring logical access point is affiliated with the same soft access device as the first logical access point (AP1) sending the broadcast message and is a logical access point operating on the non-primary link in the soft access device.

6. A method for sending system parameters of a soft access device, , the soft access device is a Mobile access point, AP, multi-link device, MLD, the soft access device comprising a first logical access point (AP1) operating on a primary link and a second logical access point (AP2) operating on a non-primary link, a link on which a access point is established is the primary link ,wherein the access point on the link can send a broadcast message; the other links on which the access points are established are the non-primary links, wherein the access points on the other links cannot send the broadcast message, wherein the method comprises:
Sending, by the soft access device, a broadcast message on the primary link, the broadcast message comprising a reduced neighbor report information element, the reduced neighbor report information element is used for indicating information of a neighboring logical access point and comprising a multi-link device identifier, a first link identifier and a system parameter change count, the multi-link device identifier is used for identifying a device to which the neighboring logical access point is affiliated with, the first link identifier is used for identifying a link corresponding to the neighboring logical access point and being configured as an identifier of the non-primary link, and the system parameter change count is used for identifying a state of update of system parameters;
receiving, by the soft access device, a first message sent by a terminal device station, STD, MLD on the primary link, the first message is used for requesting system parameters of a logical access point and comprising a second link identifier and an identifier of a target multi-link device, the second link identifier is used for identifying a link corresponding to a requested logical access point and being configured as an identifier of the non-primary link, and the identifier of the target multi-link device is used for identifying a device to which the requested logical access point is affiliated with and being configured to indicate a device to which the first logical access point (AP1) receiving the first message is affiliated with; and
sending, by the soft access device, a second message in response to the first message to the terminal device station, STA, MLD on the primary link in a case that the identifier of the target multi-link device in a received first message indicates the device to which the first logical access point (AP1) receiving the first message is affiliated with, the second message comprising an identifier of the non-primary link, system parameters of the second logical access point (AP2) operating on the non-primary link and a system parameter change count;
wherein the reduced neighbor report information element further comprises a first parameter, the first parameter is used for indicating duration of sending updated system parameters of the second logical access point (AP2) in the broadcast message of the first logical access point (AP1), and the broadcast message sent within the duration indicated by a value of the first parameter comprising the updated system parameters of the second logical access point (AP2), the duration indicates the number of subsequent broadcast messages which comprise the updated system parameter of the second logical access point (AP2).

7. The method for sending system parameters of the soft access device as claimed in claim 6, wherein the first message further comprises a system parameter change count corresponding to a state of local system parameters and an instruction whether to request only updated system parameters; and
system parameters of the second logical access point (AP2) operating on the non-primary link comprised in the second message are changed system parameters of the second logical access point (AP2) between the system parameter change count in the second message and the system parameter change count corresponding to the state of the local system parameters in the first message in a case that the instruction in the first message requests only the updated system parameters.

8. The method for sending system parameters of the soft access device as claimed in claim 6 or 8, wherein after the receiving a first message and before the sending the second message, the method further includes:
starting a timer; and
sending the second message when time of the timer is up.

9. The method for sending system parameters of the soft access device as claimed in claim 6 or 8, wherein the multi-link device identifier in the reduced neighbor report information element indicates that the neighboring logical access point is affiliated with the same device as the first logical access point (AP1) sending the broadcast message, or indicates that the neighboring logical access point is affiliated with the same soft access device as the first logical access point (AP1) sending the broadcast message and is a logical access point operating on the non-primary link in the soft access device.

10. The method for sending system parameters of a soft access device as claimed in claim 6 or 7, wherein the first message is a multi-link probe request message, and the second message is a multi-link probe response message.

11. The method for sending system parameters of the soft access device as claimed in claim 6, wherein the multi-link device identifier in the reduced neighbor report information element indicates that the neighboring logical access point is affiliated with the same device as the first logical access point (AP1) sending the broadcast message, or indicates that the neighboring logical access point is affiliated with the same soft access device as the first logical access point (AP1) sending the broadcast message and is a logical access point operating on the non-primary link in the soft access device.

12. An apparatus for acquiring system parameters of a soft access device, the soft access device is a Mobile access point, AP, multi-link device, MLD, the apparatus for acquiring system parameters of the soft access device is a terminal device station (STA) MLD, the soft access device comprising a first logical access point (AP1) operating on a primary link and a second logical access point (AP2) operating on a non-primary link, wherein the apparatus comprises a parameter acquisition module, a link on which a access point is established is the primary link ,wherein the access point on the link can send a broadcast message; the other links on which the access points are established are the non-primary links, wherein the access points on the other links cannot send the broadcast message, the parameter acquisition module configured for performing the steps of:
receiving a broadcast message sent by the soft access device on the primary link, the broadcast message comprising a reduced neighbor report information element, the reduced neighbor report information element is used for indicating information of a neighboring logical access point and comprising a multi-link device identifier, a first link identifier and a system parameter change count, the multi-link device identifier is used for identifying a device to which the neighboring logical access point is affiliated with, the first link identifier is used for identifying a link corresponding to the neighboring logical access point and configured as an identifier of the non-primary link, and the system parameter change count is used for identifying a state of update of system parameters;
sending a first message to the soft access device on the primary link in a case that the received reduced neighbor report information element indicates that a value of a system parameter change count corresponding to the non-primary link is different from a value of a system parameter change count received previously, the first message is used for requesting system parameters of a logical access point and comprising a second link identifier and an identifier of a target multi-link device, the second link identifier is used for identifying a link corresponding to a requested logical access point and being configured as an identifier of the non-primary link, and the identifier of the target multi-link device is used for identifying a device to which the requested logical access point is affiliated with and being configured to indicate a device to which the first logical access point (AP1) receiving the first message is affiliated with; and
receiving a second message in response to the first message and sent by the soft access device on the primary link, the second message comprising an identifier of the non-primary link, system parameters of the second logical access point (AP2) operating on the non-primary link and a system parameter change count;
wherein the reduced neighbor report information element comprises a first parameter, the first parameter is used for indicating duration of sending updated system parameters of the second logical access point (AP2) in the broadcast message of the first logical access point (AP1); the parameter acquisition module further configured for performing the step of:
reading the updated system parameters of the second logical access point (AP2) within the duration indicated by a value of the first parameter in a case that the received reduced neighbor report information element indicates that a value of the system parameter change count corresponding to the non-primary link is different from that of a system parameter change count received previously and a value of the first parameter indicates that a subsequent broadcast message comprises the updated system parameters of the second logical access point (AP2), the duration indicates the number of subsequent broadcast messages which comprise the updated system parameter of the second logical access point.

## Patentansprüche

1. Ein von einer Endgerätstation, STA, MLD, durchgeführtes Verfahren zum Erfassen von Systemparametern einer Soft-Zugangsvorrichtung, wobei die Soft-Zugangsvorrichtung ein mobiler Zugangspunkt, AP, eine Multi-Link-Vorrichtung, MLD, ist, wobei die Soft-Zugangsvorrichtung einen ersten logischen Zugangspunkt (AP1), der auf einer primären Verbindung arbeitet, und einen zweiten logischen Zugangspunkt (AP2), der auf einer nicht-primären Verbindung arbeitet, umfasst, wobei eine Verbindung, auf der ein Zugangspunkt eingerichtet ist, die primäre Verbindung ist, wobei der Zugangspunkt auf der Verbindung eine Broadcast-Nachricht senden kann; die anderen Verbindungen, auf denen die Zugangspunkte eingerichtet sind, die nicht-primären Verbindungen sind, wobei die Zugangspunkte auf den anderen Verbindungen die Broadcast-Nachricht nicht senden können, wobei das Verfahren umfasst:
Empfangen, durch die Endgerätstation, STA, MLD, einer Broadcast-Nachricht, die von der Soft-Zugangsvorrichtung auf der primären Verbindung gesendet wird, wobei die Broadcast-Nachricht ein reduziertes Nachbarberichtselement umfasst, wobei das reduzierte Nachbarberichtselement zum Angeben von Informationen über einen benachbarten logischen Zugangspunkt verwendet wird und eine Multi-Link-Vorrichtungskennung, eine erste Verbindungskennung und einen Systemparameter-Änderungszähler umfasst, wobei die Multi-Link-Vorrichtungskennung zum Identifizieren einer Vorrichtung verwendet wird, der der benachbarte logische Zugangspunkt zugehörig ist, die erste Verbindungskennung zum Identifizieren einer dem benachbarten logischen Zugangspunkt entsprechenden Verbindung verwendet wird und als eine Kennung der nicht-primären Verbindung konfiguriert ist, und der Systemparameter-Änderungszähler zum Identifizieren eines Aktualisierungszustands von Systemparametern verwendet wird;
Senden, durch die Endgerätstation, STA, MLD, einer ersten Nachricht an die Soft-Zugangsvorrichtung auf der primären Verbindung in einem Fall, in dem ein empfangenes reduziertes Nachbarberichtselement anzeigt, dass sich ein Wert eines Systemparameter-Änderungszählers, der der nicht-primären Verbindung entspricht, von einem Wert eines zuvor empfangenen Systemparameter-Änderungszählers unterscheidet, wobei die erste Nachricht zum Anfordern von Systemparametern eines logischen Zugangspunkts verwendet wird und eine zweite Verbindungskennung und eine Kennung einer Ziel-Multi-Link-Vorrichtung umfasst, wobei die zweite Verbindungskennung zum Identifizieren einer einem angeforderten logischen Zugangspunkt entsprechenden Verbindung verwendet wird und als eine Kennung der nicht-primären Verbindung konfiguriert ist, und die Kennung der Ziel-Multi-Link-Vorrichtung zum Identifizieren einer Vorrichtung verwendet wird, der der angeforderte logische Zugangspunkt zugehörig ist, und konfiguriert ist, um eine Vorrichtung anzuzeigen, der der die erste Nachricht empfangende erste logische Zugangspunkt (AP1) zugehörig ist; und
Empfangen, durch die Endgerätstation, STA, MLD, einer zweiten Nachricht als Reaktion auf die erste Nachricht, die von der Soft-Zugangsvorrichtung auf der primären Verbindung gesendet wird, wobei die zweite Nachricht eine Kennung der nicht-primären Verbindung, Systemparameter des zweiten logischen Zugangspunkts (AP2), der auf der nicht-primären Verbindung arbeitet, und einen Systemparameter-Änderungszähler umfasst;
wobei das reduzierte Nachbarberichtsinformationselement einen ersten Parameter umfasst, wobei der erste Parameter zum Angeben der Dauer des Sendens aktualisierter Systemparameter des zweiten logischen Zugangspunkts (AP2) in der Broadcast-Nachricht des ersten logischen Zugangspunkts (AP1) verwendet wird; und das Verfahren ferner umfasst:
Lesen der aktualisierten Systemparameter des zweiten logischen Zugangspunkts (AP2) innerhalb der durch einen Wert des ersten Parameters angegebenen Dauer in einem Fall, in dem das empfangene reduzierte Nachbarberichtsinformationselement anzeigt, dass sich der Wert des Systemparameter-Änderungszählers, der der nicht-primären Verbindung entspricht, von dem Wert des zuvor empfangenen Systemparameter-Änderungszählers unterscheidet und der Wert des ersten Parameters anzeigt, dass eine nachfolgende Broadcast-Nachricht die aktualisierten Systemparameter des zweiten logischen Zugangspunkts (AP2) umfasst, wobei die Dauer die Anzahl der nachfolgenden Broadcast-Nachrichten anzeigt, welche die aktualisierten Systemparameter des zweiten logischen Zugangspunkts (AP2) umfassen.

2. Das Verfahren zum Erfassen von Systemparametern der Soft-Zugangsvorrichtung nach Anspruch 1, wobei die erste Nachricht ferner einen Systemparameter-Änderungszähler, der einem Zustand lokaler Systemparameter entspricht, und eine Anweisung, ob nur aktualisierte Systemparameter angefordert werden sollen, umfasst; und
in einem Fall, in dem die Anweisung in der ersten Nachricht nur die aktualisierten Systemparameter anfordert, sind die in der zweiten Nachricht enthaltenen Systemparameter des zweiten logischen Zugangspunkts (AP2), der auf der nicht-primären Verbindung arbeitet, geänderte Systemparameter des zweiten logischen Zugangspunkts (AP2) zwischen dem Systemparameter-Änderungszähler in der zweiten Nachricht und dem Systemparameter-Änderungszähler, der dem Zustand der lokalen Systemparameter in der ersten Nachricht entspricht.

3. Das Verfahren zum Erfassen von Systemparametern der Soft-Zugangsvorrichtung nach Anspruch 1 oder 2, wobei das Verfahren nach dem Empfangen der von der Soft-Zugangsvorrichtung auf der primären Verbindung gesendeten Broadcast-Nachricht und vor dem Senden der ersten Nachricht ferner umfasst:
Bestimmen, ob eine durch die erste Verbindungskennung angezeigte Verbindung die nicht-primäre Verbindung ist, gemäß lokal gespeicherten Informationen und einem Wert einer Verbindungskennung im reduzierten Nachbarberichtsinformationselement, in einem Fall, in dem die Multi-Link-Vorrichtungskennung im empfangenen reduzierten Nachbarberichtsinformationselement anzeigt, dass der benachbarte logische Zugangspunkt derselben Vorrichtung zugehörig ist wie der erste logische Zugangspunkt (AP1), der die Broadcast-Nachricht sendet; alternativ,
Bestimmen der durch die erste Verbindungskennung angezeigten Verbindung als die nicht-primäre Verbindung in einem Fall, in dem die Multi-Link-Vorrichtungskennung im empfangenen reduzierten Nachbarberichtsinformationselement anzeigt, dass der benachbarte logische Zugangspunkt derselben Soft-Zugangsvorrichtung zugehörig ist wie der erste logische Zugangspunkt (AP1), der die Broadcast-Nachricht sendet, und der benachbarte logische Zugangspunkt ein logischer Zugangspunkt ist, der auf der nicht-primären Verbindung in der Soft-Zugangsvorrichtung arbeitet.

4. Das Verfahren zum Erfassen von Systemparametern der Soft-Zugangsvorrichtung nach Anspruch 1 oder 2, wobei die erste Nachricht eine Multi-Link-Sondierungsanforderungsnachricht ist und die zweite Nachricht eine Multi-Link-Sondierungsantwortnachricht ist.

5. Das Verfahren zum Erfassen von Systemparametern der Soft-Zugangsvorrichtung nach Anspruch 1, wobei das Verfahren nach dem Empfangen der von der Soft-Zugangsvorrichtung auf der primären Verbindung gesendeten Broadcast-Nachricht und vor dem Lesen der aktualisierten Systemparameter des zweiten logischen Zugangspunkts (AP2) ferner umfasst:
Bestimmen, ob die durch die erste Verbindungskennung angezeigte Verbindung die nicht-primäre Verbindung ist, gemäß lokal gespeicherten Informationen und dem Wert einer Verbindungskennung im reduzierten Nachbarberichtsinformationselement, in einem Fall, in dem die Multi-Link-Vorrichtungskennung im empfangenen reduzierten Nachbarberichtsinformationselement anzeigt, dass der benachbarte logische Zugangspunkt derselben Vorrichtung zugehörig ist wie der erste logische Zugangspunkt (AP1), der die Broadcast-Nachricht sendet; alternativ,
Bestimmen der durch die erste Verbindungskennung angezeigten Verbindung als die nicht-primäre Verbindung in einem Fall, in dem die Multi-Link-Vorrichtungskennung im empfangenen reduzierten Nachbarberichtsinformationselement anzeigt, dass der benachbarte logische Zugangspunkt derselben Soft-Zugangsvorrichtung zugehörig ist wie der erste logische Zugangspunkt (AP1), der die Broadcast-Nachricht sendet, und ein logischer Zugangspunkt ist, der auf der nicht-primären Verbindung in der Soft-Zugangsvorrichtung arbeitet.

6. Ein Verfahren zum Senden von Systemparametern einer Soft-Zugangsvorrichtung, wobei die Soft-Zugangsvorrichtung ein mobiler Zugangspunkt, AP, eine Multi-Link-Vorrichtung, MLD, ist, wobei die Soft-Zugangsvorrichtung einen ersten logischen Zugangspunkt (AP1), der auf einer primären Verbindung arbeitet, und einen zweiten logischen Zugangspunkt (AP2), der auf einer nicht-primären Verbindung arbeitet, umfasst, wobei eine Verbindung, auf der ein Zugangspunkt eingerichtet ist, die primäre Verbindung ist, wobei der Zugangspunkt auf der Verbindung eine Broadcast-Nachricht senden kann; die anderen Verbindungen, auf denen die Zugangspunkte eingerichtet sind, die nicht-primären Verbindungen sind, wobei die Zugangspunkte auf den anderen Verbindungen die Broadcast-Nachricht nicht senden können, wobei das Verfahren umfasst:
Senden, durch die Soft-Zugangsvorrichtung, einer Broadcast-Nachricht auf der primären Verbindung, wobei die Broadcast-Nachricht ein reduziertes Nachbarberichtsinformationselement umfasst, wobei das reduzierte Nachbarberichtsinformationselement zum Angeben von Informationen über einen benachbarten logischen Zugangspunkt verwendet wird und eine Multi-Link-Vorrichtungskennung, eine erste Verbindungskennung und einen Systemparameter-Änderungszähler umfasst, wobei die Multi-Link-Vorrichtungskennung zum Identifizieren einer Vorrichtung verwendet wird, der der benachbarte logische Zugangspunkt zugehörig ist, die erste Verbindungskennung zum Identifizieren einer dem benachbarten logischen Zugangspunkt entsprechenden Verbindung verwendet wird und als eine Kennung der nicht-primären Verbindung konfiguriert ist, und der Systemparameter-Änderungszähler zum Identifizieren eines Aktualisierungszustands von Systemparametern verwendet wird;
Empfangen, durch die Soft-Zugangsvorrichtung, einer ersten Nachricht, die von einer Endgerätstation, STD, MLD, auf der primären Verbindung gesendet wird, wobei die erste Nachricht zum Anfordern von Systemparametern eines logischen Zugangspunkts verwendet wird und eine zweite Verbindungskennung und eine Kennung einer Ziel-Multi-Link-Vorrichtung umfasst, wobei die zweite Verbindungskennung zum Identifizieren einer einem angeforderten logischen Zugangspunkt entsprechenden Verbindung verwendet wird und als eine Kennung der nicht-primären Verbindung konfiguriert ist, und die Kennung der Ziel-Multi-Link-Vorrichtung zum Identifizieren einer Vorrichtung verwendet wird, der der angeforderte logische Zugangspunkt zugehörig ist, und konfiguriert ist, um eine Vorrichtung anzuzeigen, der der die erste Nachricht empfangende erste logische Zugangspunkt (AP1) zugehörig ist; und
Senden, durch die Soft-Zugangsvorrichtung, einer zweiten Nachricht als Reaktion auf die erste Nachricht an die Endgerätstation, STA, MLD, auf der primären Verbindung in einem Fall, in dem die Kennung der Ziel-Multi-Link-Vorrichtung in einer empfangenen ersten Nachricht die Vorrichtung anzeigt, der der die erste Nachricht empfangende erste logische Zugangspunkt (AP1) zugehörig ist, wobei die zweite Nachricht eine Kennung der nicht-primären Verbindung, Systemparameter des zweiten logischen Zugangspunkts (AP2), der auf der nicht-primären Verbindung arbeitet, und einen Systemparameter-Änderungszähler umfasst;
wobei das reduzierte Nachbarberichtsinformationselement ferner einen ersten Parameter umfasst, wobei der erste Parameter zum Angeben der Dauer des Sendens aktualisierter Systemparameter des zweiten logischen Zugangspunkts (AP2) in der Broadcast-Nachricht des ersten logischen Zugangspunkts (AP1) verwendet wird, und die Broadcast-Nachricht, die innerhalb der durch einen Wert des ersten Parameters angegebenen Dauer gesendet wird, die aktualisierten Systemparameter des zweiten logischen Zugangspunkts (AP2) umfasst, wobei die Dauer die Anzahl der nachfolgenden Broadcast-Nachrichten anzeigt, welche die aktualisierten Systemparameter des zweiten logischen Zugangspunkts (AP2) umfassen.

7. Das Verfahren zum Senden von Systemparametern der Soft-Zugangsvorrichtung nach Anspruch 6, wobei die erste Nachricht ferner einen Systemparameter-Änderungszähler, der einem Zustand lokaler Systemparameter entspricht, und eine Anweisung, ob nur aktualisierte Systemparameter angefordert werden sollen, umfasst; und
Systemparameter des zweiten logischen Zugangspunkts (AP2), der auf der nicht-primären Verbindung arbeitet, die in der zweiten Nachricht enthalten sind, geänderte Systemparameter des zweiten logischen Zugangspunkts (AP2) zwischen dem Systemparameter-Änderungszähler in der zweiten Nachricht und dem Systemparameter-Änderungszähler, der dem Zustand der lokalen Systemparameter in der ersten Nachricht entspricht, sind, in einem Fall, in dem die Anweisung in der ersten Nachricht nur die aktualisierten Systemparameter anfordert.

8. Das Verfahren zum Senden von Systemparametern der Soft-Zugangsvorrichtung nach Anspruch 6 oder 8, wobei nach dem Empfangen einer ersten Nachricht und vor dem Senden der zweiten Nachricht das Verfahren ferner umfasst:
Starten eines Zeitgebers; und
Senden der zweiten Nachricht, wenn die Zeit des Zeitgebers abgelaufen ist.

9. Das Verfahren zum Senden von Systemparametern der Soft-Zugangsvorrichtung nach Anspruch 6 oder 8, wobei die Multi-Link-Vorrichtungskennung im reduzierten Nachbarberichtsinformationselement anzeigt, dass der benachbarte logische Zugangspunkt derselben Vorrichtung zugehörig ist wie der erste logische Zugangspunkt (AP1), der die Broadcast-Nachricht sendet, oder anzeigt, dass der benachbarte logische Zugangspunkt derselben Soft-Zugangsvorrichtung zugehörig ist wie der erste logische Zugangspunkt (AP1), der die Broadcast-Nachricht sendet, und ein logischer Zugangspunkt ist, der auf der nicht-primären Verbindung in der Soft-Zugangsvorrichtung arbeitet.

10. Das Verfahren zum Senden von Systemparametern der Soft-Zugangsvorrichtung nach Anspruch 6 oder 7, wobei die erste Nachricht eine Multi-Link-Sondierungsanforderungsnachricht ist und die zweite Nachricht eine Multi-Link-Sondierungsantwortnachricht ist

11. Das Verfahren zum Senden von Systemparametern der Soft-Zugangsvorrichtung nach Anspruch 6, wobei die Multi-Link-Vorrichtungskennung im reduzierten Nachbarberichtsinformationselement anzeigt, dass der benachbarte logische Zugangspunkt derselben Vorrichtung zugehörig ist wie der erste logische Zugangspunkt (AP1), der die Broadcast-Nachricht sendet, oder anzeigt, dass der benachbarte logische Zugangspunkt derselben Soft-Zugangsvorrichtung zugehörig ist wie der erste logische Zugangspunkt (AP1), der die Broadcast-Nachricht sendet, und ein logischer Zugangspunkt ist, der auf der nicht-primären Verbindung in der Soft-Zugangsvorrichtung arbeitet.

12. Eine Vorrichtung zum Erfassen von Systemparametern einer Soft-Zugangsvorrichtung, wobei die Soft-Zugangsvorrichtung ein mobiler Zugangspunkt, AP, eine Multi-Link-Vorrichtung, MLD, ist, wobei die Vorrichtung zum Erfassen von Systemparametern der Soft-Zugangsvorrichtung eine Endgerätstation (STA) MLD ist, wobei die Soft-Zugangsvorrichtung einen ersten logischen Zugangspunkt (AP1), der auf einer primären Verbindung arbeitet, und einen zweiten logischen Zugangspunkt (AP2), der auf einer nicht-primären Verbindung arbeitet, umfasst, wobei die Vorrichtung ein Parametererfassungsmodul umfasst, eine Verbindung, auf der ein Zugangspunkt eingerichtet ist, die primäre Verbindung ist, wobei der Zugangspunkt auf der Verbindung eine Broadcast-Nachricht senden kann; die anderen Verbindungen, auf denen die Zugangspunkte eingerichtet sind, die nicht-primären Verbindungen sind, wobei die Zugangspunkte auf den anderen Verbindungen die Broadcast-Nachricht nicht senden können, das Parametererfassungsmodul konfiguriert ist zum Durchführen der Schritte des:
Empfangens einer Broadcast-Nachricht, die von der Soft-Zugangsvorrichtung auf der primären Verbindung gesendet wird, wobei die Broadcast-Nachricht ein reduziertes Nachbarberichtsinformationselement umfasst, wobei das reduzierte Nachbarberichtsinformationselement zum Angeben von Informationen über einen benachbarten logischen Zugangspunkt verwendet wird und eine Multi-Link-Vorrichtungskennung, eine erste Verbindungskennung und einen Systemparameter-Änderungszähler umfasst, wobei die Multi-Link-Vorrichtungskennung zum Identifizieren einer Vorrichtung verwendet wird, der der benachbarte logische Zugangspunkt zugehörig ist, die erste Verbindungskennung zum Identifizieren einer dem benachbarten logischen Zugangspunkt entsprechenden Verbindung verwendet wird und als eine Kennung der nicht-primären Verbindung konfiguriert ist, und der Systemparameter-Änderungszähler zum Identifizieren eines Aktualisierungszustands von Systemparametern verwendet wird;
Sendens einer ersten Nachricht an die Soft-Zugangsvorrichtung auf der primären Verbindung in einem Fall, in dem das empfangene reduzierte Nachbarberichtsinformationselement anzeigt, dass sich ein Wert eines Systemparameter-Änderungszählers, der der nicht-primären Verbindung entspricht, von einem Wert eines zuvor empfangenen Systemparameter-Änderungszählers unterscheidet, wobei die erste Nachricht zum Anfordern von Systemparametern eines logischen Zugangspunkts verwendet wird und eine zweite Verbindungskennung und eine Kennung einer Ziel-Multi-Link-Vorrichtung umfasst, wobei die zweite Verbindungskennung zum Identifizieren einer einem angeforderten logischen Zugangspunkt entsprechenden Verbindung verwendet wird und als eine Kennung der nicht-primären Verbindung konfiguriert ist, und die Kennung der Ziel-Multi-Link-Vorrichtung zum Identifizieren einer Vorrichtung verwendet wird, der der angeforderte logische Zugangspunkt zugehörig ist, und konfiguriert ist, um eine Vorrichtung anzuzeigen, der der die erste Nachricht empfangende erste logische Zugangspunkt (AP1) zugehörig ist; und
Empfangens einer zweiten Nachricht als Reaktion auf die erste Nachricht, die von der Soft-Zugangsvorrichtung auf der primären Verbindung gesendet wird, wobei die zweite Nachricht eine Kennung der nicht-primären Verbindung, Systemparameter des zweiten logischen Zugangspunkts (AP2), der auf der nicht-primären Verbindung arbeitet, und einen Systemparameter-Änderungszähler umfasst;
wobei das reduzierte Nachbarberichtsinformationselement einen ersten Parameter umfasst, wobei der erste Parameter zum Angeben der Dauer des Sendens aktualisierter Systemparameter des zweiten logischen Zugangspunkts (AP2) in der Broadcast-Nachricht des ersten logischen Zugangspunkts (AP1) verwendet wird;
wobei das Parametererfassungsmodul ferner zum Durchführen des Schritts konfiguriert ist:
Lesens der aktualisierten Systemparameter des zweiten logischen Zugangspunkts (AP2) innerhalb der durch einen Wert des ersten Parameters angegebenen Dauer in einem Fall, in dem das empfangene reduzierte Nachbarberichtsinformationselement anzeigt, dass sich ein Wert des Systemparameter-Änderungszählers, der der nicht-primären Verbindung entspricht, von dem eines zuvor empfangenen Systemparameter-Änderungszählers unterscheidet und ein Wert des ersten Parameters anzeigt, dass eine nachfolgende Broadcast-Nachricht die aktualisierten Systemparameter des zweiten logischen Zugangspunkts (AP2) umfasst, wobei die Dauer die Anzahl der nachfolgenden Broadcast-Nachrichten anzeigt, welche die aktualisierten Systemparameter des zweiten logischen Zugangspunkts umfassen.

## Revendications

1. Un procédé mis en œuvre par une station de dispositif terminal, STA, MLD, pour acquérir des paramètres système d'un dispositif d'accès logiciel, le dispositif d'accès logiciel étant un point d'accès mobile, AP, un dispositif multi-lien, MLD, le dispositif d'accès logiciel comprenant un premier point d'accès logique (AP1) fonctionnant sur un lien primaire et un second point d'accès logique (AP2) fonctionnant sur un lien non-primaire, un lien sur lequel un point d'accès est établi étant le lien primaire, dans lequel le point d'accès sur le lien peut envoyer un message de diffusion ; les autres liens sur lesquels les points d'accès sont établis étant les liens non-primaires, dans lesquels les points d'accès sur les autres liens ne peuvent pas envoyer le message de diffusion, le procédé comprenant les étapes consistant à:
recevoir, par la station de dispositif terminal, STA, MLD, un message de diffusion envoyé par le dispositif d'accès logiciel sur le lien primaire, le message de diffusion comprenant un élément de rapport de voisin réduit, l'élément de rapport de voisin réduit étant utilisé pour indiquer des informations sur un point d'accès logique voisin et comprenant un identifiant de dispositif multi-lien, un premier identifiant de lien et un compteur de changement de paramètre système, l'identifiant de dispositif multi-lien étant utilisé pour identifier un dispositif auquel le point d'accès logique voisin est affilié, le premier identifiant de lien étant utilisé pour identifier un lien correspondant au point d'accès logique voisin et étant configuré comme un identifiant du lien non-primaire, et le compteur de changement de paramètre système étant utilisé pour identifier un état de mise à jour des paramètres système;
envoyer, par la station de dispositif terminal STA MLD, un premier message au dispositif d'accès logiciel sur le lien primaire dans un cas où un élément de rapport de voisin réduit reçu indique qu'une valeur d'un compteur de changement de paramètre système correspondant au lien non-primaire est différente d'une valeur d'un compteur de changement de paramètre système reçu précédemment, le premier message étant utilisé pour demander des paramètres système d'un point d'accès logique et comprenant un second identifiant de lien et un identifiant d'un dispositif multi-lien cible, le second identifiant de lien étant utilisé pour identifier un lien correspondant à un point d'accès logique demandé et étant configuré comme un identifiant du lien non-primaire, et l'identifiant du dispositif multi-lien cible étant utilisé pour identifier un dispositif auquel le point d'accès logique demandé est affilié et étant configuré pour indiquer un dispositif auquel le premier point d'accès logique (AP1) recevant le premier message est affilié; et
recevoir, par la station de dispositif terminal STA MLD, un second message en réponse au premier message et envoyé par le dispositif d'accès logiciel sur le lien primaire, le second message comprenant un identifiant du lien non-primaire, des paramètres système du second point d'accès logique (AP2) fonctionnant sur le lien non-primaire et un compteur de changement de paramètre système;
dans lequel l'élément d'information de rapport de voisin réduit comprend un premier paramètre, le premier paramètre étant utilisé pour indiquer une durée d'envoi de paramètres système mis à jour du second point d'accès logique (AP2) dans le message de diffusion du premier point d'accès logique (AP1) ; et le procédé comprenant en outre l'étape consistant à:
lire les paramètres système mis à jour du second point d'accès logique (AP2) pendant la durée indiquée par une valeur du premier paramètre dans un cas où l'élément d'information de rapport de voisin réduit reçu indique que la valeur du compteur de changement de paramètre système correspondant au lien non-primaire est différente de la valeur du compteur de changement de paramètre système reçu précédemment et que la valeur du premier paramètre indique qu'un message de diffusion subséquent comprend les paramètres système mis à jour du second point d'accès logique (AP2), la durée indiquant le nombre de messages de diffusion subséquents qui comprennent le paramètre système mis à jour du second point d'accès logique (AP2).

2. Le procédé pour acquérir des paramètres système du dispositif d'accès logiciel selon la revendication 1, dans lequel le premier message comprend en outre un compteur de changement de paramètre système correspondant à un état de paramètres système locaux et une instruction indiquant s'il faut demander uniquement des paramètres système mis à jour;
et dans un cas où l'instruction dans le premier message demande uniquement les paramètres système mis à jour, les paramètres système du second point d'accès logique (AP2) fonctionnant sur le lien non-primaire compris dans le second message sont des paramètres système modifiés du second point d'accès logique (AP2) entre le compteur de changement de paramètre système dans le second message et le compteur de changement de paramètre système correspondant à l'état des paramètres système locaux dans le premier message.

3. Le procédé pour acquérir des paramètres système du dispositif d'accès logiciel selon la revendication 1 ou 2, dans lequel, après la réception du message de diffusion envoyé par le dispositif d'accès logiciel sur le lien primaire et avant l'envoi du premier message, le procédé comprend en outre les étapes consistant à:
déterminer si un lien indiqué par le premier identifiant de lien est le lien non-primaire selon des informations stockées localement et une valeur d'un identifiant de lien dans l'élément d'information de rapport de voisin réduit dans un cas où l'identifiant de dispositif multi-lien dans l'élément d'information de rapport de voisin réduit reçu indique que le point d'accès logique voisin est affilié au même dispositif que le premier point d'accès logique (AP1) envoyant le message de diffusion; alternativement,
déterminer le lien indiqué par le premier identifiant de lien comme étant le lien non-primaire dans un cas où l'identifiant de dispositif multi-lien dans l'élément d'information de rapport de voisin réduit reçu indique que le point d'accès logique voisin est affilié au même dispositif d'accès logiciel que le premier point d'accès logique (AP1) envoyant le message de diffusion, et le point d'accès logique voisin est un point d'accès logique fonctionnant sur le lien non-primaire dans le dispositif d'accès logiciel.

4. Le procédé pour acquérir des paramètres système du dispositif d'accès logiciel selon la revendication 1 ou 2, dans lequel le premier message est un message de demande de sonde multi-lien, et le second message est un message de réponse de sonde multi-lien.

5. Le procédé pour acquérir des paramètres système du dispositif d'accès logiciel selon la revendication 1, dans lequel, après la réception du message de diffusion envoyé par le dispositif d'accès logiciel sur le lien primaire et avant la lecture des paramètres système mis à jour du second point d'accès logique (AP2), le procédé comprend en outre les étapes consistant à:
déterminer si le lien indiqué par le premier identifiant de lien est le lien non-primaire selon des informations stockées localement et la valeur d'un identifiant de lien dans l'élément d'information de rapport de voisin réduit dans un cas où l'identifiant de dispositif multi-lien dans l'élément d'information de rapport de voisin réduit reçu indique que le point d'accès logique voisin est affilié au même dispositif que le premier point d'accès logique (AP1) envoyant le message de diffusion; alternativement,
déterminer le lien indiqué par le premier identifiant de lien comme étant le lien non-primaire dans un cas où l'identifiant de dispositif multi-lien dans l'élément d'information de rapport de voisin réduit reçu indique que le point d'accès logique voisin est affilié au même dispositif d'accès logiciel que le premier point d'accès logique (AP1) envoyant le message de diffusion et est un point d'accès logique fonctionnant sur le lien non-primaire dans le dispositif d'accès logiciel.

6. Un procédé pour envoyer des paramètres système d'un dispositif d'accès logiciel, le dispositif d'accès logiciel étant un point d'accès mobile, AP, un dispositif multi-lien, MLD, le dispositif d'accès logiciel comprenant un premier point d'accès logique (AP1) fonctionnant sur un lien primaire et un second point d'accès logique (AP2) fonctionnant sur un lien non-primaire, un lien sur lequel un point d'accès est établi étant le lien primaire, dans lequel le point d'accès sur le lien peut envoyer un message de diffusion ; les autres liens sur lesquels les points d'accès sont établis étant les liens non-primaires, dans lesquels les points d'accès sur les autres liens ne peuvent pas envoyer le message de diffusion, le procédé comprenant les étapes consistant à:
envoyer, par le dispositif d'accès logiciel, un message de diffusion sur le lien primaire, le message de diffusion comprenant un élément d'information de rapport de voisin réduit, l'élément d'information de rapport de voisin réduit étant utilisé pour indiquer des informations sur un point d'accès logique voisin et comprenant un identifiant de dispositif multi-lien, un premier identifiant de lien et un compteur de changement de paramètre système, l'identifiant de dispositif multi-lien étant utilisé pour identifier un dispositif auquel le point d'accès logique voisin est affilié, le premier identifiant de lien étant utilisé pour identifier un lien correspondant au point d'accès logique voisin et étant configuré comme un identifiant du lien non-primaire, et le compteur de changement de paramètre système étant utilisé pour identifier un état de mise à jour des paramètres système;
recevoir, par le dispositif d'accès logiciel, un premier message envoyé par une station de dispositif terminal, STA, MLD, sur le lien primaire, le premier message étant utilisé pour demander des paramètres système d'un point d'accès logique et comprenant un second identifiant de lien et un identifiant d'un dispositif multi-lien cible, le second identifiant de lien étant utilisé pour identifier un lien correspondant à un point d'accès logique demandé et étant configuré comme un identifiant du lien non-primaire, et l'identifiant du dispositif multi-lien cible étant utilisé pour identifier un dispositif auquel le point d'accès logique demandé est affilié et étant configuré pour indiquer un dispositif auquel le premier point d'accès logique (AP1) recevant le premier message est affilié; et
envoyer, par le dispositif d'accès logiciel, un second message en réponse au premier message à la station de dispositif terminal, STA, MLD, sur le lien primaire dans un cas où l'identifiant du dispositif multi-lien cible dans un premier message reçu indique le dispositif auquel le premier point d'accès logique (AP1) recevant le premier message est affilié, le second message comprenant un identifiant du lien non-primaire, des paramètres système du second point d'accès logique (AP2) fonctionnant sur le lien non-primaire et un compteur de changement de paramètre système;
dans lequel l'élément d'information de rapport de voisin réduit comprend en outre un premier paramètre, le premier paramètre étant utilisé pour indiquer une durée d'envoi de paramètres système mis à jour du second point d'accès logique (AP2) dans le message de diffusion du premier point d'accès logique (AP1), et le message de diffusion envoyé pendant la durée indiquée par une valeur du premier paramètre comprenant les paramètres système mis à jour du second point d'accès logique (AP2), la durée indiquant le nombre de messages de diffusion subséquents qui comprennent le paramètre système mis à jour du second point d'accès logique (AP2).

7. Le procédé pour envoyer des paramètres système du dispositif d'accès logiciel selon la revendication 6, dans lequel le premier message comprend en outre un compteur de changement de paramètre système correspondant à un état de paramètres système locaux et une instruction indiquant s'il faut demander uniquement des paramètres système mis à jour; et
les paramètres système du second point d'accès logique (AP2) fonctionnant sur le lien non-primaire compris dans le second message sont des paramètres système modifiés du second point d'accès logique (AP2) entre le compteur de changement de paramètre système dans le second message et le compteur de changement de paramètre système correspondant à l'état des paramètres système locaux dans le premier message dans un cas où l'instruction dans le premier message demande uniquement les paramètres système mis à jour.

8. Le procédé pour envoyer des paramètres système du dispositif d'accès logiciel selon la revendication 6 ou 8, dans lequel, après la réception d'un premier message et avant l'envoi du second message, le procédé inclut en outre les étapes consistant à:
démarrer un temporisateur; et
envoyer le second message lorsque le temps du temporisateur est écoulé.

9. Le procédé pour envoyer des paramètres système du dispositif d'accès logiciel selon la revendication 6 ou 8, dans lequel l'identifiant de dispositif multi-lien dans l'élément d'information de rapport de voisin réduit indique que le point d'accès logique voisin est affilié au même dispositif que le premier point d'accès logique (AP1) envoyant le message de diffusion, ou indique que le point d'accès logique voisin est affilié au même dispositif d'accès logiciel que le premier point d'accès logique (AP1) envoyant le message de diffusion et est un point d'accès logique fonctionnant sur le lien non-primaire dans le dispositif d'accès logiciel.

10. Le procédé pour envoyer des paramètres système du dispositif d'accès logiciel selon la revendication 6 ou 7, dans lequel le premier message est un message de demande de sonde multi-lien, et le second message est un message de réponse de sonde multi-lien.

11. Le procédé pour envoyer des paramètres système du dispositif d'accès logiciel selon la revendication 6, dans lequel l'identifiant de dispositif multi-lien dans l'élément d'information de rapport de voisin réduit indique que le point d'accès logique voisin est affilié au même dispositif que le premier point d'accès logique (AP1) envoyant le message de diffusion, ou indique que le point d'accès logique voisin est affilié au même dispositif d'accès logiciel que le premier point d'accès logique (AP1) envoyant le message de diffusion et est un point d'accès logique fonctionnant sur le lien non-primaire dans le dispositif d'accès logiciel.

12. Un appareil pour acquérir des paramètres système d'un dispositif d'accès logiciel, le dispositif d'accès logiciel étant un point d'accès mobile, AP, un dispositif multi-lien, MLD, l'appareil pour acquérir des paramètres système du dispositif d'accès logiciel étant une station de dispositif terminal (STA) MLD, le dispositif d'accès logiciel comprenant un premier point d'accès logique (AP1) fonctionnant sur un lien primaire et un second point d'accès logique (AP2) fonctionnant sur un lien non-primaire, l'appareil comprenant un module d'acquisition de paramètres, un lien sur lequel un point d'accès est établi étant le lien primaire, dans lequel le point d'accès sur le lien peut envoyer un message de diffusion ; les autres liens sur lesquels les points d'accès sont établis étant les liens non-primaires, dans lesquels les points d'accès sur les autres liens ne peuvent pas envoyer le message de diffusion, le module d'acquisition de paramètres étant configuré pour effectuer les étapes consistant à:
recevoir un message de diffusion envoyé par le dispositif d'accès logiciel sur le lien primaire, le message de diffusion comprenant un élément d'information de rapport de voisin réduit, l'élément d'information de rapport de voisin réduit étant utilisé pour indiquer des informations d'un point d'accès logique voisin et comprenant un identifiant de dispositif multi-lien, un premier identifiant de lien et un compteur de changement de paramètre système, l'identifiant de dispositif multi-lien étant utilisé pour identifier un dispositif auquel le point d'accès logique voisin est affilié, le premier identifiant de lien étant utilisé pour identifier un lien correspondant au point d'accès logique voisin et configuré comme un identifiant du lien non-primaire, et le compteur de changement de paramètre système étant utilisé pour identifier un état de mise à jour des paramètres système ;
envoyer un premier message au dispositif d'accès logiciel sur le lien primaire dans un cas où l'élément d'information de rapport de voisin réduit reçu indique qu'une valeur d'un compteur de changement de paramètre système correspondant au lien non-primaire est différente d'une valeur d'un compteur de changement de paramètre système reçu précédemment, le premier message étant utilisé pour demander des paramètres système d'un point d'accès logique et comprenant un second identifiant de lien et un identifiant d'un dispositif multi-lien cible, le second identifiant de lien étant utilisé pour identifier un lien correspondant à un point d'accès logique demandé et étant configuré comme un identifiant du lien non-primaire, et l'identifiant du dispositif multi-lien cible étant utilisé pour identifier un dispositif auquel le point d'accès logique demandé est affilié et étant configuré pour indiquer un dispositif auquel le premier point d'accès logique (AP1) recevant le premier message est affilié; et
recevoir un second message en réponse au premier message et envoyé par le dispositif d'accès logiciel sur le lien primaire, le second message comprenant un identifiant du lien non-primaire, des paramètres système du second point d'accès logique (AP2) fonctionnant sur le lien non-primaire et un compteur de changement de paramètre système;
dans lequel l'élément d'information de rapport de voisin réduit comprend un premier paramètre, le premier paramètre étant utilisé pour indiquer une durée d'envoi de paramètres système mis à jour du second point d'accès logique (AP2) dans le message de diffusion du premier point d'accès logique (AP1); le module d'acquisition de paramètres étant en outre configuré pour effectuer l'étape consistant à:
lire les paramètres système mis à jour du second point d'accès logique (AP2) pendant la durée indiquée par une valeur du premier paramètre dans un cas où l'élément d'information de rapport de voisin réduit reçu indique qu'une valeur du compteur de changement de paramètre système correspondant au lien non-primaire est différente de celle d'un compteur de changement de paramètre système reçu précédemment et qu'une valeur du premier paramètre indique qu'un message de diffusion subséquent comprend les paramètres système mis à jour du second point d'accès logique (AP2), la durée indiquant le nombre de messages de diffusion subséquents qui comprennent le paramètre système mis à jour du second point d'accès logique.
